# EUROPEAN PATENT APPLICATION

(11) **EP 2 428 734 A1**
(43) Date of publication of application: **14.03.2012**
(21) Application number: 10771974.2
(22) Date of filing: 09.03.2010
(51) Int. Cl.: F24C 7/08

(54) **MOVABLE PANEL CONTROL MECHANISM FOR HOUSEHOLD APPLIANCES**

(30) Priority: 05.05.2009 CN 200920138216 U
(71) Applicant: Tsann Kuen (Zhangzhou) Enterprise Co., Ltd., Fujian 363000 (CN)
(72) Inventor: LIU, TaChi, Tainan City Taiwan (CN)
(74) Representative: Lermer, Christoph
(86) International application number: PCT/CN2010/070937
(87) International publication number: WO 2010/127571

(57) **Abstract**

The present invention is provided with a movable panel controlling mechanism for household appliance, which includes: a base, with a receiving room and a receiving entrance; a control panel, equipped with a control interface and a display screen; a slideway member, with which the control panel entrances to or exits out of the receiving room through the receiving entrance. Compared to the existing technology, the control panel can entrance to or exit out of the receiving room through the receiving room with the slideway member. The control panel is extending out of the receiving room for the user's operation when used, and received in the receiving room when unused. The technology proposal of the present invention makes the volume of the household appliance and the cost of the package and transformation reduced. Moreover the occupy space is reduced when the household appliance is received in the receiving room, which makes it convenient for the user's storage.

## Description

### Field of the invention

The present invention relates to the household appliance, especially to a movable controlling mechanism for household appliance.

### Background of the invention

The control interface and the display screen of the existing household appliance are generally disposed in the sidewall of the base. This kind of design with bigger volume of the base makes the cost of the package and the transformation much higher. On the other hand, the household appliance with bigger storage space is unsuitable for the user's storage. The control interface and the display screen are disposed on the surface of the base, which makes the household appliance in a mass which is unsuitable for the optimization design.

### Summary of the invention

The object of the present invention is to overcome the disadvantages of the existing technology, providing a movable panel controlling mechanism for household appliance with reduced volume and easy storage.

The technology proposal of the present invention is:
A movable panel controlling mechanism for household appliance includes:
   A base with a receiving room and a receiving entrance;
   A control panel, equipped with a control interface and a display screen;
   A slideway member, with which the control panel entrances to and exits from the receiving room through the receiving entrance.

In another preferred embodiment, the slideway member includes:
At least a slideway disposed in the receiving room;
At least a slide block fixed to the control panel, the slide block is sleeved in the slideway, to drive the control panel sliding along the slideway.

In another preferred embodiment, a spring is sleeved in the slideway.
In another preferred embodiment, the slideway member includes two slideways and two slide blocks, the two slideways are disposed in the both sides of the receiving room separately, and the two slide blocks are fixed to the both sides of the receiving room separately and sleeved in the corresponding slideway separately.

In another preferred embodiment, the present invention further includes a lock catch member, which includes:
A first lock catch, fixed to the inner side of the control panel;
A second lock catch, disposed at the bottom of the receiving room, when the control panel is sliding to the bottom of the receiving room along the slideway, the second lock catch is locked to the first lock catch;
A push rod, one end of which withstanding the second lock catch, and the other end extending out of the receiving entrance.

In another preferred embodiment, the present invention further includes a button disposed in the end of the push rob which is extending out of the receiving entrance.

In another preferred embodiment, the inner side of the first lock catch is formed to a first catch surface of inclined; the outside of the second lock catch is formed to a second catch surface of inclined.

In another preferred embodiment, the household appliance is an electric rice cooker, a grill, a coffee machine, a microwave oven, a toaster, an electric fan, an electric heater, a juice machine or a soymilk machine.

Compared to the existing technology according to the description of the present invention, the movable panel controlling mechanism for household appliance has such advantages:
Firstly, the control panel entrances to and exits out of the receiving room by the slideway member through the receiving entrance. When in used, the control panel is extending out of the receiving room for the user's operation. When unused, the control panel is received in the receiving room, reducing the volume of the household appliance of the present invention and the cost of the package and the transforming. The occupy space is reduced when the household appliance is received, which is convenient for the user's storage.

Secondly, the present invention is provided with a lock catch member, with which the control panel is locked to prevent it sliding out when the control panel is received. So the receiving of the control panel is more reliable.

Thirdly, the slideway is sleeved with a spring. The control panel can pop out of the receiving room automatically with the elastic force of the spring when the lock catch of the first lock catch and the second lock catch is released.

Fourthly, as the inner side of the first lock catch is formed to a first catch surface of inclined and the outside of the second lock catch is formed to a second catch surface of inclined, the two lock catches is easily locked when the control panel is pushed to the receiving room, making the operation easier and more convenient.

### Brief description of the drawings

Fig.1 illustrates the structure of the present invention when the control panel is extending out of the receiving room;
Fig.2 illustrates the structure of the present invention when the control panel is received in the receiving room;
Fig.3 illustrates the sectional structure of the present invention when the control panel is extending out of the receiving room;
Fig.4 illustrates the sectional structure of the present invention when the control panel is received in the receiving room;
Fig.5 illustrates the enlarge view of the A part in the fig.4.

### Detailed description of the preferred embodiment

The present invention is further decrypted with the following preferred embodiment.

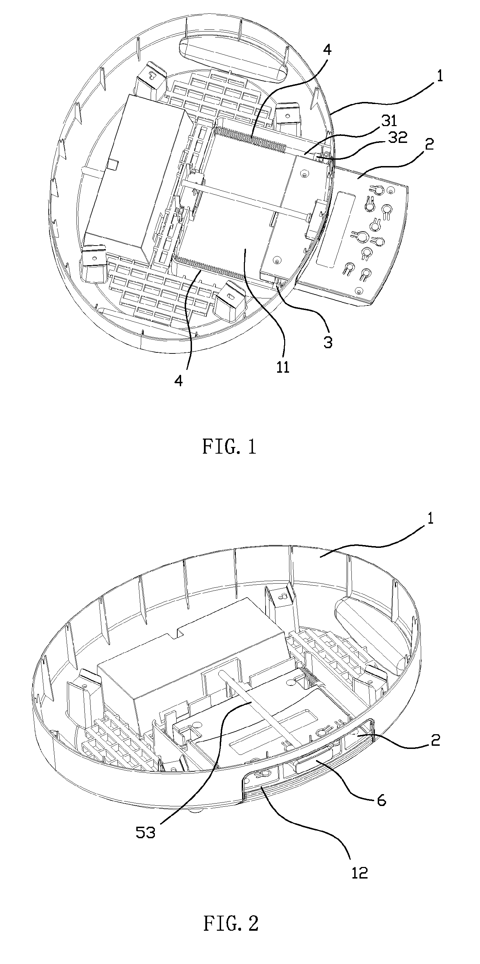

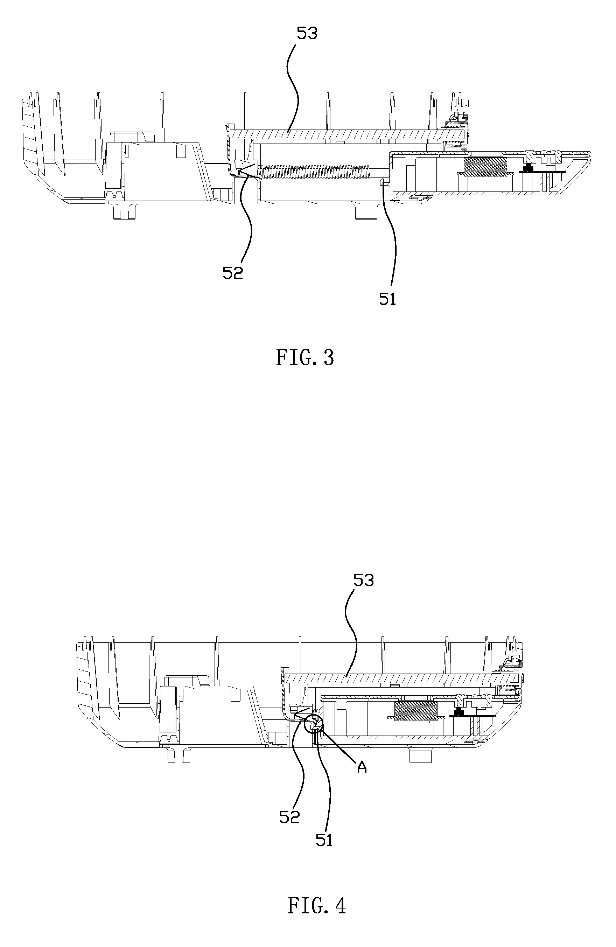

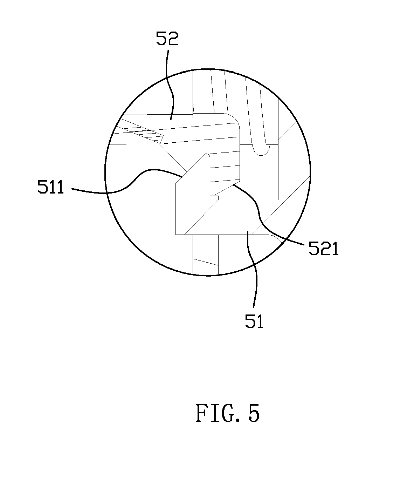

Refer to the fig.1, fig.2, fig.3, fig.4 and fig.5, the present invention of a movable panel controlling mechanism includes a base 1 and a control panel 2. The base 1 is equipped with a receiving room 11 and a receiving entrance 12. The base 1 is equipped with other component of the household appliance. The control interface and the display screen are disposed on the control panel 2. The receiving entrance 12 is disposed in the vertical wall of the base 1, the slideway member 3 is horizontally disposed inside the receiving room 11 of the base 1 to control the panel 2 horizontally entrances to and exists out of the base 1.

The slideway member 3 includes slideways 31 and slide blocks 32; the two slideways 31 are disposed on the both sides of the receiving room 11, and the slide blocks 32 are sleeved in the corresponding slideway 31 separately. The two slide blocks 32 are fixed to the both sides of the control panel 2 separately. With the slideways 31 and the slide blocks 32, the control panel 2 entrances to or exists out of the receiving room 11 through the receiving entrance 12. The two slideways 31 are sleeved with the spring 4 separately.

The movable panel controlling mechanism for household appliance of the present invention further includes a lock catch member, which is equipped with a first lock catch 51, a second lock catch 52 and a push rod 53. The first lock catch 51 is fixed to the inner side of the control panel 2, and the second lock catch is disposed at the bottom of the receiving room 11. When the control panel 2 is pushed to the bottom of the receiving room 11 along the slideway 31, the second lock catch 52 is locked to the first lock catch 51; one end of the push rod 53 is withstood the second lock catch 52, and the other end is extending out of the receiving entrance 12 with a button 6 connected to it.

As the inner side of the first lock catch 51 is formed to a first catch surface 511 of inclined and the outside of the second lock catch 52 is formed to a second catch surface 521 of inclined, the two lock catches is easily locked when the control panel 2 is pushed to the receiving room 11, making the operation easier and more convenient.

To open the movable panel controlling mechanism for household appliance of the present invention in storage status, push the button 6 to drive the push rod 53 to make the second lock catch 52 raised up. With the elastic force of the spring 4, when the lock catching of the first lock catch 51 and the second lock catch 52 is released, the control panel 2 slides out of the receiving room 11 through the receiving entrance as the slide block 32 fixed in the control panel 2 slides along the slideway 31. This time the control panel is situated in the usage status for the user's operation.

To store the movable panel controlling mechanism for household appliance of the present invention in usage status, push the control panel 2 with hand. The control panel 2 slides into the receiving room through the receiving entrance 12 as the slide block 32 fixed in the control panel slides along the slideway 31. The spring is compressed at the time the control panel 2 is pushed. The first catch surface 511 in the inner side of the first lock catch withstands the second catch surface 521 in the outside of the second lock catch 52 to make the two lock catches locked. So the control panel is stored inside the receiving room 11.

Although the present invention has been described with reference to the preferred embodiments thereof for carrying out the invention, it is apparent to those skilled in the art that a variety of modifications and changes may be made without departing from the scope of the present invention which is intended to be defined by the appended claims.

### Industrial applicability

The present invention is provided with a movable panel controlling mechanism for household appliance. The control panel entrances to and exists out of the receiving room through the receiving entrance with the slideway member. The control panel is extending out of the receiving room for the user's operation when used. When unused, the control panel is received in the receiving room, reducing the volume of the household appliance of the present invention and the cost of the package and the transforming as well. The present invention has well industrial applicability.

## Claims

1. A movable panel controlling mechanism for household appliance, wherein includes:
A base with a receiving room and a receiving entrance;
A control panel, equipped with a control interface and a display screen;
A slideway member, with which the control panel entrances to and exits from the receiving room through the receiving entrance.

2. The movable panel controlling mechanism for household appliance according to the claim 1, wherein the slideway member includes:
At least a slideway disposed in the receiving room;
At least a slide block fixed to the control panel, the slide block is sleeved in the slideway, to drive the control panel sliding along the slideway.

3. The movable panel controlling mechanism for household appliance according to the claim 2, wherein a spring is sleeved in the slideway.

4. The movable panel controlling mechanism for household appliance according to the claim 2, wherein the slideway member includes two slideways and two slide blocks, the two slideways are disposed in the both sides of the receiving room separately, and the two slide blocks are fixed to the both sides of the receiving room separately and sleeved in the corresponding slideway separately.

5. The movable panel controlling mechanism for household appliance according to the claim 1, wherein further includes a lock catch member, which includes:
A first lock catch, fixed to the inner side of the control panel;
A second lock catch, disposed at the bottom of the receiving room, when the control panel is sliding to the bottom of the receiving room along the slideway, the second lock catch is locked to the first lock catch;
A push rod, one end of which withstanding the second lock catch, and the other end extending out of the receiving entrance.

6. The movable panel controlling mechanism for household appliance according to the claim 5, wherein further includes a button disposed in the end of the push rob which is extending out of the receiving entrance.

7. The movable panel controlling mechanism for household appliance according to the claim 5, wherein the inner side of the first lock catch is formed to a first catch surface of inclined, the outside of the second lock catch is formed to a second catch surface of inclined.

8. The movable panel controlling mechanism for household appliance according to the claim 1, wherein the household appliance is an electric rice cooker, a grill, a coffee machine, a microwave oven, a toaster, an electric fan, an electric heater, a juice machine or a soymilk machine.

9. The movable panel controlling mechanism for household appliance according to the claim 1, wherein the receiving entrance is disposed on the vertical wall of the base and the slideway member is disposed horizontally inside the receiving room of the base, to control the panel entrancing to or exiting out of the base horizontally.
